# EUROPEAN PATENT SPECIFICATION

(11) **EP 4 167 766 B1**
(45) Date of publication and mention of the grant of the patent: **12.06.2024**
(21) Application number: 21732080.3
(22) Date of filing: 17.06.2021
(51) Int. Cl.: A23L 27/60

(54) **FLAXSEED-BASED MAYONNAISE**
MAYONNAISE AUF LEINSAMENBASIS
MAYONNAISE À BASE DE GRAINES DE LIN

(30) Priority: 18.06.2020 EP 20180669
(43) Date of publication of application: 26.04.2023
(73) Proprietor: Société des Produits Nestlé S.A., 1800 Vevey (CH)
(72) Inventor: HUSSON, Jwanro, 37390 Notre Dame d'Oé (FR); BARRO, Lilian, 37700 La ville Aux Dames (FR)
(74) Representative: Wakasugi, Yuki
(86) International application number: PCT/EP2021/066519
(87) International publication number: WO 2021/255210

(56) References cited:
- ES-A1- 2 319 157
- RU-A- 2015 145 385
- RU-C1- 2 524 076
- RU-C1- 2 663 590
- RU-C2- 2 646 235

## Description

The present invention relates generally to the field of plant-based foods. In particular, the present invention relates to plant-based mayonnaise-like products. One embodiment of the present invention relates to a flaxseed-based mayonnaise-like product. For example, the present invention relates to a flaxseed-based mayonnaise-like product comprising oil, vinegar, and a plant ingredient comprising a dried hot water-based flaxseed extract or flaxseed flour, for example a flaxseed oilcake flour.

Mayonnaise is a well-known food product in the culinary world today, enjoyed globally by many consumers of all ages and sexes. Mayonnaise is well-liked as dressing, condiment or sauce and is often used for sandwiches, hamburgers, salads or on French fries, for example. It is also used as a basis for many culinary sauces.

Mayonnaise can be considered an emulsion containing oil, egg and an acid. Often, mayonnaise has a colour between white and yellow and has a consistency ranging from a light creamy texture to a gel-like texture.

Recently, consumers increasingly attempt to reduce their egg consumption, for example in order to ensure that a normal cholesterol level is maintained. In line with this, for example vegan mayonnaises play an increasingly bigger role in the condiments market. More and more people are consuming a plant-based or a flexitarian diet and do not wish to omit mayonnaise-like products. As a result, commercial egg-free mayonnaise alternatives are available. Such mayonnaise alternatives are frequently based on nuts, soy, aquafaba, avocado, tofu, or pulses, for example.

Nevertheless, there is a persisting need for further healthy plant-based mayonnaise alternatives, ideally based on other ingredients. For example, this can be beneficial for people that suffer from allergies against nuts, soy, aquafaba, avocado, tofu, or pulses, that need or wish to reduce their intake of these ingredients, or that wish to diversify their diet event further.

It would therefore be desirable to provide the art with a plant-based mayonnaise alternative which is not based on nuts, soy, aquafaba, avocado, or tofu, which has a great taste, a good nutritional profile and certain health benefits.

Any reference to prior art documents in this specification is not to be considered an admission that such prior art is widely known or forms part of the common general knowledge in the field. RU2524076 C1 discloses a sauce mayonnaise-type flax meal containing vegetable oil or a mixture of vegetable oils, emulsifier, mustard flour, salt, sugar, food acid, citric acid or acetic acid, flavorings, spices and water.

The objective of the present invention was it to improve or enrich the state of the art and in particular to provide a plant-based mayonnaise alternative which has a great taste, ingredients that are perceived as healthy and are not based on nuts, soy, aquafaba, avocado, or tofu, or to at least provide a useful alternative to existing plant-based mayonnaise alternatives.

The inventors were surprised to see that the objective of the present invention could be achieved by the subject matter of the independent claims. The dependent claims further develop the idea of the present invention.

Accordingly, the present invention provides a plant-based mayonnaise-like product that is based on flaxseed.

As used in this specification, the words "comprises", "comprising", and similar words, are not to be interpreted in an exclusive or exhaustive sense. In other words, they are intended to mean "including, but not limited to".

The present inventors have shown that using flaxseed as an ingredient it was possible to produce a mayonnaise-like product. Without wising to be bound by theory, the inventors currently believe that this was possible due to the formation of a protein-polysaccharide complex that allowed it to generate the right texture for mayonnaise-like products. The inventors have successfully created several plant-based mayonnaise-like prototypes based on flaxseed, optionally in combination with flageolet, cauliflower, lentils or tomato.

Consequently, the present invention relates in part to a plant-based mayonnaise-like product based on flaxseed. For example, the present invention relates to a flaxseed-based mayonnaise-like product comprising oil, vinegar, and a plant ingredient comprising a dried hot water-based flaxseed extract or flaxseed flour, for example a flaxseed oilcake flour, and wherein the plant ingredient further comprises a dried hot water-based flageolet extract or flageolet flour.

Flaxseed is a plant-based food that provides healthful fat, antioxidants, and fiber. For example, flaxseed contains omega-3 unsaturated fatty acids, polyunsaturated fatty acids such as alpha-linolenic acid, lignans, and antioxidants. Because of its healthy reputation, flaxseed is sometimes referred to "functional food". For example, flaxseed has a reputation to prevent several conditions such as constipation, diabetes, high cholesterol, heart disease, cancer.

For the purpose of the present invention, "flaxseed-based" composition shall mean a composition comprising flaxseed or an extract thereof. The flaxseed is preferably a flaxseed flour, for example a flaxseed oilcake flour. For example, a "flaxseed-based" composition may be a composition in which flaxseed or an extract thereof is essential for the texture of the composition. Further, a "flaxseed-based" composition may be a composition in which comprises at least 1 weight%, at least 2 weight % or at least 3 weight-% of flaxseed or an extract thereof.

A hot water-based flaxseed extract may be a flaxseed extract that is obtainable from flaxseed by extraction with hot water. Water may be considered hot if it has a temperature of about 50°C or higher, for example of about 60°C or higher.

A flaxseed extract shall be considered dried, if its water content after extraction is at least partially reduced. For example, its water content after extraction may be reduced by at least 50%, by at least 70% or by at least 90%. For example, the flaxseed extract may be in the form of a past or a powder.

For example, the dried hot water-based flaxseed extract is obtainable by a process comprising the steps of grinding flaxseeds in water; heating the water-flaxseed mixture; collecting the water soluble phase, and drying the water soluble phase.

For example, the water-flaxseed mixture may be heated to a temperature in the range of 60-100°C, for example to about 70-95°C. The water soluble phase may be dried by any means known in the art. For example, the extract may be dried at room temperature. It may also be heated to evaporate at least a fraction of the water from the extract. Alternatively, a vacuum may be applied to accelerate drying. Freeze drying is also feasible.

In one embodiment or the present invention, the dried hot water-based flaxseed extract is obtained by a process comprising the steps of grinding flaxseeds in water; heating the water-flaxseed mixture to a temperature in the range of 60-100°C, collecting the water soluble phase, and drying the water soluble phase.

The plant ingredient in the plant-based mayonnaise-like product may consist of flaxseed, for example flaxseed flour, or an extract thereof. Hence, the dried hot water-based extract may be manufactured from flaxseed as only plant-based ingredient.

However, the present inventors have found that exciting varieties of the flaxseed-based mayonnaise-like product of the present invention can be produced if the flaxseed extract is combined with an extract of other vegetables, or flaxseed flour is combined with flageolet flour.

The inventors have found that the nutritional profile can be varied, and a cauliflower taste can be added, if the mayonnaise-like product contains in addition a water-based cauliflower extract. The resulting mayonnaise-like product has the advantage that it represents an attractive opportunity to add cauliflower to a diet of people that usually do not like cauliflower. Hence, in the flaxseed-based mayonnaise-like product in accordance with the present invention, the plant ingredient may further comprise a dried hot water-based cauliflower extract.

The inventors have further found that a great texture and color can be achieved if the mayonnaise-like product contains in addition a water-based lentil extract. Hence, in the flaxseed-based mayonnaise-like product in accordance with the present invention, the plant ingredient may further comprise a dried hot water-based lentil extract.

The inventors have further found that a great texture, taste and odor can be achieved if the mayonnaise-like product contains in addition a water-based flageolet extract or flageolet flour. Hence, in the flaxseed-based mayonnaise-like product in accordance with the present invention, the plant ingredient may further comprise a dried hot water-based flageolet extract or flageolet flour.

The inventors have further found that a great texture, color and odor can be achieved if the mayonnaise-like product contains in addition a water-based tomato extract. Hence, in the flaxseed-based mayonnaise-like product in accordance with the present invention, the plant ingredient may further comprise a dried hot water-based tomato extract.

Accordingly, the plant ingredient may further comprise a dried hot water-based flageolet extract, a dried hot water-based cauliflower extract, a dried hot water-based tomato extract, a dried hot water-based lentil extract, or combinations thereof. The plant ingredient may further comprise a flageolet flour.

The dried hot water-based flageolet extract, dried hot water-based cauliflower extract, dried hot water-based tomato extract, dried hot water-based lentil extract, or the combination thereof may be prepared separately from the dried hot water-based flaxseed extract. This allows it that different optimized extraction conditions can be selected for the individual plant-based ingredients to be extracted.

However, in one embodiment of the present invention it may be preferred if the flaxseed is co-extracted with the cauliflower, lentils, flageolets, tomatoes or combinations thereof. This has the advantage that the process to manufacture the flaxseed-based mayonnaise-like product in accordance with the present invention can be simplified, saving costs, equipment and -possibly - process time.

Hence, the plant ingredient in the plant-based mayonnaise-like product may be manufactured from flaxseed and at least one other plant-based ingredient. For example, flaxseed may be used in relation to cauliflower, lentils, flageolets, tomatoes, or combinations thereof in a weight ratio of at least about 20:80, 30:70. 40:60 or 50:50.

As the mayonnaise-like product in accordance with the present invention shall be flaxseed-based, it may be preferable, that - if the plant ingredient in the plant-based mayonnaise-like product is manufactured from flaxseed and at least one other plant-based ingredient - flaxseed may be used in relation to cauliflower, lentils, flageolets, tomatoes, or combinations thereof in a weight ratio of at least about 50:50, at least about 60:40, at least about 70:20, at least about 80:20, or at least about 90:10.

The plant ingredient may be obtainable by a process comprising the steps of grinding the flaxseed, optionally together with cauliflower, lentils, flageolets and/or tomatoes; extracting the ground composition with water; collecting the soluble phase; and drying the soluble phase. The inventors have obtained excellent results, when extracting the ground composition with water was carried out at about 80-95°C for about 5 to 50 minutes.

Very much like mayonnaise can the mayonnaise-like product of the present invention be further refined by adding further ingredients, such as salt and/or spices, for example. A person skilled in the art will be able to select these ingredients appropriately for the intended use of the mayonnaise-like product of the present invention. Hence, the mayonnaise-like product in accordance with the present invention may further comprise salt and/or spices.

As mayonnaise is one of the most versatile condiments, it can be combined with many different spices.

For example, the spices may be selected from the group consisting of allspice, anise, bay leaf, basil, borage, cardamom, celery, cilantro, chili, chipotle, chives, cinnamon, coriander, curry leaf, dill, elderflower, fennel, garlic, ginger, horseradish, juniper berry, lavender, lemon verbena, marjoram, mint, mustard, nutmeg, oregano, paprika, parsley, pepper, rosemary, saffron, sage, sesame, tarragon, thyme, turmeric, vanilla, wasabi, water cress or combinations thereof.

The viscosity of the resulting mayonnaise, as well as its fat content, can be adjusted, for example, by the addition of water. Hence, the flaxseed-based mayonnaise-like product in accordance with the present invention may further comprise water.

The mayonnaise/like product of the present invention can be prepared with different fat contents, resembling standard, low-fat or very low-fat mayonnaises.

To achieve the experience of a standard mayonnaise-like product, the flaxseed-based mayonnaise-like product may comprise about 50-70 weight-% oil.

However, more and more consumers wish to reduce their fat consumption and would like to maintain a low caloric intake. In order to allow these consumers to enjoy mayonnaise-like products, the flaxseed-based mayonnaise-like product in accordance with the present invention may be prepared with a reduced oil content. For example, the flaxseed-based mayonnaise-like product may comprise about 30-50 weight-% oil, or about 10-30 weight-% oil.

The present inventors have prepared several prototypes of the flaxseed-based mayonnaise-like product in accordance with the present invention. Very good results were obtained when the flaxseed-based mayonnaise-like product comprised about 5-12 weight-% of the plant ingredient, for example about 8-10 weight-% of the plant ingredient.

The prototypes further comprised vinegar, salt and spices. Like for normal mayonnaise, vinegar can be partially or completely replaced by other culinary acids, such as lemon juice, for example. Typically, very good flaxseed-based mayonnaise-like product in accordance with the present invention comprised comprising about 5-12 weight-% of the plant ingredient, about 3-7 weight-% vinegar, about 1-2 weight-% salt, and/or about 0.1 - 1 weight-% spices.

The mayonnaise-like product in accordance with the present invention can be prepared in accordance with standard mayonnaise production, with the exception that the plant ingredient, optionally in combination with water, is used instead of egg-based ingredient.

Accordingly, the plant ingredient, optionally in combination with water, is mixed with oil to generate an emulsion. The mixing can be continued until the desired firmness is achieved. At any time, vinegar, salt and/or spices can be added to achieve the desired taste profile. Hence, the flaxseed-based mayonnaise-like product in accordance with the present invention may be obtainable or obtained by a process comprising the steps of mixing the plant ingredient with water, adding oil, vinegar, salt and spices and mixing the mixture until the desired firmness is achieved.

Those skilled in the art will understand that they can freely combine all features of the present invention disclosed herein. In particular, features described for the product of the present invention may be combined with the use of the present invention and vice versa. Further, features described for different embodiments of the present invention may be combined.

Although the invention has been described by way of example, it should be appreciated that variations and modifications may be made without departing from the scope of the invention as defined in the claims.

Furthermore, where known equivalents exist to specific features, such equivalents are incorporated as if specifically referred in this specification. Further advantages and features of the present invention are apparent from the figures and non-limiting examples.

### Examples:

### Example 1: Flaxseed-Flageolet blend (50:50) extraction

100g of flageolet is grinded in a grinder Retsch for 10 seconds, at 8000 rpm. 100 g of flaxseeds are macerated in 1 L of distilled water for 1 hour at room temperature, the resulting slurry is then grinded during 30 seconds by small batches using a blender Waring (speed 1). 100 g of grinded flageolet and 1 L of hot distilled water at 90°C are added to the mixture (the amount of water can be adapted if the mixture is too dense).

Extraction is carried out at 80°C during 30 minutes with a Heidolph overhead mixer; the mixture is left at room temperature to cool down before centrifugation. The mixture is centrifugated in a 1.0 L rotor at 9000 rpm and 40°C for 10 minutes. After centrifugation, a film remains on the surface of the pellet; it is collected and combined with the supernatant. On the other hand, the pellet is collected in a beaker and 1 L of hot distilled water at 90°C is added.

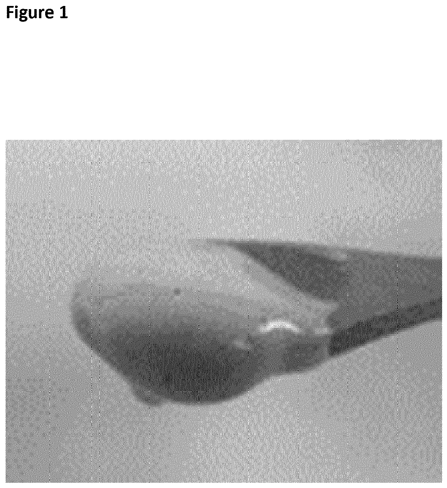

Extraction is then carried out at 80°C during 20 minutes with a Heidolph overhead mixer; the mixture is left at room temperature to cool down before centrifugation; The mixture is centrifugated in a 1.0 L rotor at 9000 rpm and 40°C for 10 minutes. The two supernatants are finally combined and mixed during 20 min with a Heidolph overhead mixer at room temperature to homogenize the extract (Figure 1). The extract is freeze-dried and stored at -20°C.

| **Extract** | **Ratio** | **%** | **Recipe** | **Comments** | **Proteins%** | **Total Carbs (%)** | **Total Fibers (%)** |
|---|---|---|---|---|---|---|---|
| Flaxseed-Flageolet | 50:50 | 8% | 35mL Water | | 31 | 30 | 26 |
| | | | 15mL Oil | Texture Taste Odor → Ok | | | |
| | | | 3mL vinegar | | | | |
| | | | 150mg pepper | | | | |
| | | | 150mg curcumin | | | | |
| | | | 0,8g salt | | | | |

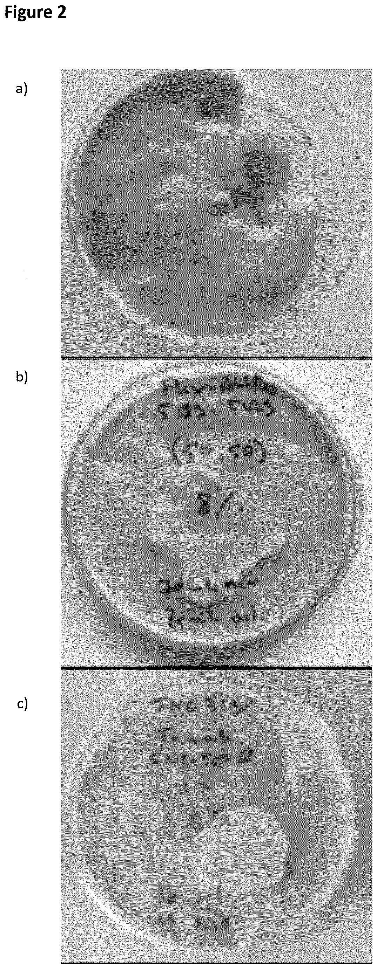

Flaxseed-Cauliflower, Flaxseed-Lentils, and Flaxseed-Tomato blends (50:50) extractions are carried out using the above-mentioned protocol (Figure 2 a, b, and c respectively).

| **Extract** | **Ratio** | **%** | **Recipe** | **Comments** | **Proteins%** | **Total Carbs (%)** | **Total Fibers (%)** |
|---|---|---|---|---|---|---|---|
| | 50:50 | 8% | 35mL Water | Cauliflower taste | 19 | 33 | 25 |
| Flaxseed-Cauliflower | | | 15mL Oil | | | | |
| | | | 3mL vinegar | | | | |
| | | | 150mg pepper | | | | |
| | | | 150mg curcumin | | | | |
| | | | 0,8g salt | | | | |
| | 50:50 | 8% | 35mL Water | Good texture and color | 23 | 51 | 19 |
| Flaxseed-Lentils | | | 15mL Oil | | | | |
| | | | 3mL vinegar | | | | |
| | | | 150mg pepper | | | | |
| | | | 150mg curcumin | | | | |
| | | | 0,8g salt | | | | |
| | 50:50 | 8% | 35mL Water | Tomato taste & odor Good Consistence | 11 | 34 | 13 |
| Flaxseed-Tomato | | | 15mL Oil | | | | |
| | | | 3mL vinegar | | | | |
| | | | 150mg pepper | | | | |
| | | | 150mg curcumin | | | | |
| | | | 0,8g salt | | | | |

### Example 2: Flaxseed oilcake-Flageolet blend (25:75) extraction

50g of flaxseed oilcake and 150g of flageolet are separately grinded in a grinder Retsch for 10 seconds, at 8000 rpm. 2 L of hot distilled water at 90°C are added to the mixture (the amount of water can be adapted if the mixture is too dense).

Extraction is carried out at 80°C during 30 minutes with a Heidolph overhead mixer; the mixture is left at room temperature to cool down before centrifugation. The mixture is centrifugated in a 1.0 L rotor at 9000 rpm and 40°C for 10 minutes. After centrifugation, a film remains on the surface of the pellet; it is collected and combined with the supernatant. On the other hand, the pellet is collected in a beaker and 1 L of hot distilled water at 90°C is added.

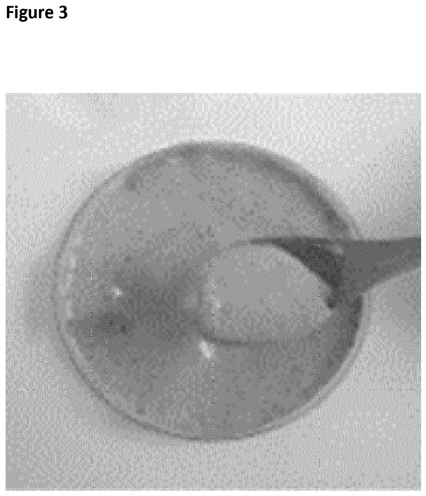

Extraction is then carried out at 80°C during 20 minutes with a Heidolph overhead mixer; the mixture is left at room temperature to cool down before centrifugation. The mixture is centrifugated in a 1.0 L rotor at 9000 rpm and 40°C for 10 minutes. The two supernatants are finally combined and mixed during 20 min with a Heidolph overhead mixer at room temperature to homogenize the extract (Figure 3). The extract is freeze-dried and stored at -20°C.

| **Extract** | **Ratio** | **%** | **Recipe** | **Comments** | **Proteins%** | **Total Carbs (%)** | **Total Fibers (%)** |
|---|---|---|---|---|---|---|---|
| Flaxseed oil cake-Flageolet | 25:75 | 10% | 35mL Water | Texture Taste Odor →Ok | 30 | 44 | 22 |
| | | | 15mL Oil | | | | |
| | | | 3mL vinegar | | | | |
| | | | 150mg pepper | | | | |
| | | | 150mg curcumin | | | | |
| | | | 0,8g salt | | | | |

Flaxseed oilcake-cauliflower, Flaxseed oilcake-Lentils, and Flaxseed oilcake-Tomato blends (25:75) extractions are carried out using the above-mentioned protocol.

### Example 3: Mayonnaise preparation at 60% fat

1- Weigh 4g of the plant ingredient from examples 1 & 2,
2- Add 40mL of water and mix gently,
3- Add 60mL of sunflower oil,
4- Add 2mL vinegar, 0.150g pepper, 0.8g salt, 0.150g curcuma,
5- Using a blender, mix until the desired firmness achieved (e.g. 30 seconds)

### Example 4: Mayonnaise preparation at 30% fat

1- Weigh 8g of the plant ingredient from examples 1,
2- Add 70mL of water and mix gently,
3- Add 30mL of sunflower oil,
4- Add 2mL vinegar, 0.150g pepper, 0.8g salt, 0.150g curcuma,
5- Using a blender, mix until the desired firmness achieved (e.g. 30 seconds)

### Example 5: Mayonnaise preparation at 30% fat

1- Weigh 10g of the plant ingredient from examples 2,
2- Add 70mL of water and mix gently,
3- Add 30mL of sunflower oil,
4- Add 2mL vinegar, 0.150g pepper, 0.8g salt, 0.150g curcuma,
5- Using a blender, mix until the desired firmness achieved (e.g. 30 seconds)

### Example 6: flageolet and flaxseed oilcake flours

Whole flageolet is ground in a grinder for 10 seconds, at 8000 rpm. The flageolet flour is sieved at 500 microns. The commercial flaxseed oilcake flour is used at 200 micron.

### Example 7: Mayonnaise preparation at 60% fat

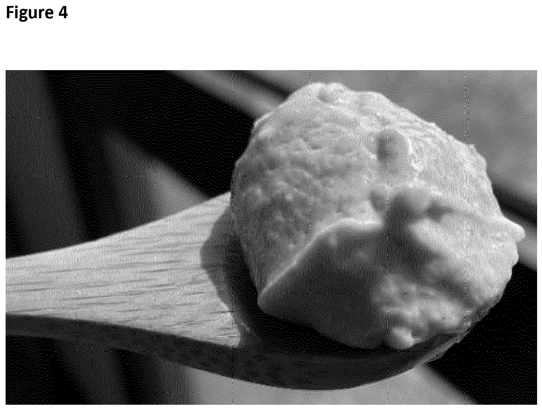

1- Weigh 4g of flageolet flour and 4g of flaxseed oilcake from example 1,
2- Add 40mL of water and mix gently,
3- Add 60mL of sunflower oil,
4- Add 3.5 mL vinegar, 0.150g pepper, 2g salt, 0.3g curcuma,
5- Using a blender, mix for about 30 seconds until the desired firmness achieved (Figure 4)

### Example 8: Mayonnaise preparation at 40% fat

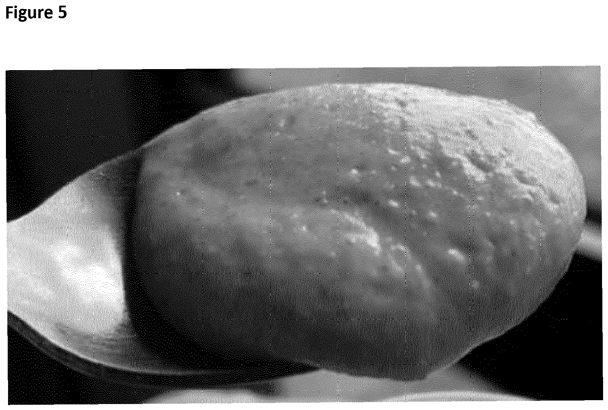

1- Weigh 4g of flageolet flour and 4g of flaxseed oilcake from example 1,
2- Add 60mL of water and mix gently,
3- Add 40mL of sunflower oil,
4- Add 3.5 mL vinegar, 0.150g pepper, 2g salt, 0.3g curcuma,
5- Using a blender, mix for about 30 seconds until the desired firmness achieved (Figure 5)

### Example 9: Mayonnaise preparation at 60% fat

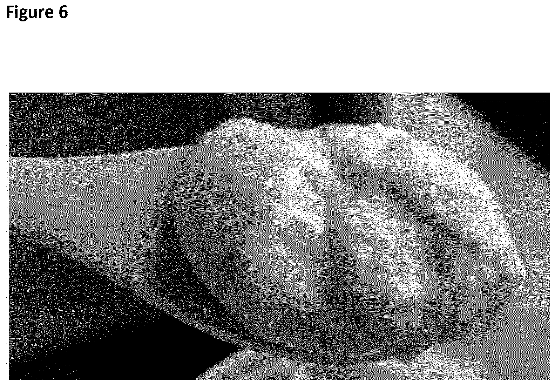

1- Weigh 2.4g of flageolet flour and 5.6g of flaxseed oilcake from example 1,
2- Add 40mL of water and mix gently,
3- Add 60mL of sunflower oil,
4- Add 3.5 mL vinegar, 0.150g pepper, 2g salt, 0.3g curcuma,
5- Using a blender, mix for about 30 seconds until the desired firmness achieved (Figure 6)

## Claims

1. Flaxseed-based mayonnaise-like product comprising oil, vinegar, and a plant ingredient comprising a dried hot water-based flaxseed extract or flaxseed flour, and wherein the plant ingredient further comprises a dried hot water-based flageolet extract or flageolet flour.

2. Flaxseed-based mayonnaise-like product in accordance with claim 1, wherein the dried hot water-based flaxseed extract is obtainable by a process comprising the steps of grinding flaxseeds in water; heating the water-flaxseed mixture to a temperature in the range of 60-100°C, for example to about 70-95°C; collecting the water soluble phase, and drying the water soluble phase.

3. Flaxseed-based mayonnaise-like product in accordance with one of the preceding claims, wherein the plant ingredient is obtainable by a process comprising the steps of grinding the flaxseed, optionally together with cauliflower, flageolets and/or tomatoes; extracting the ground composition with water at about 80-95°C for about 5 to 50 minutes; collecting the soluble phase and drying the soluble phase.

4. Flaxseed-based mayonnaise-like product in accordance with claim 1 comprising oil, vinegar, flaxseed flour and flageolet flour.

5. Flaxseed-based mayonnaise-like product in accordance with one of the preceding claims, further comprising salt and/or spices.

6. Flaxseed-based mayonnaise-like product in accordance with one of the preceding claims, further comprising water.

7. Flaxseed-based mayonnaise-like product in accordance with one of the preceding claims, comprising about 50-70 weight-% oil.

8. Flaxseed-based mayonnaise-like product in accordance with one of the preceding claims, comprising about 30-50 weight-% oil.

9. Flaxseed-based mayonnaise-like product in accordance with one of the preceding claims, comprising about 10-30 weight-% oil.

10. Flaxseed-based mayonnaise-like product in accordance with one of the preceding claims, comprising about 5-12 weight-% of the plant ingredient, about 3-7 weight-% vinegar, about 1-2 weight-% salt, and/or about 0.1 - 1 weight-% spices.

11. Flaxseed-based mayonnaise-like product in accordance with one of the preceding claims, obtainable by a process comprising the steps of mixing the plant ingredient with water, adding oil, vinegar salt and spices and mixing the mixture until the desired firmness is achieved.

## Patentansprüche

1. Mayonnaiseartiges Produkt auf Leinsamenbasis, umfassend Öl, Essig und einen pflanzlichen Bestandteil, umfassend einen getrockneten Leinsamen-Extrakt auf Heißwasserbasis oder Leinsamenmehl, und wobei der pflanzliche Bestandteil ferner einen getrockneten Flageolet-Extrakt auf Heißwasserbasis oder FlageoletMehl umfasst.

2. Mayonnaiseartiges Produkt auf Leinsamenbasis nach Anspruch 1, wobei der getrocknete Leinsamen-Extrakt auf Heißwasserbasis durch ein Verfahren erhältlich ist, umfassend die Schritte eines Zermahlens der Leinsamen in Wasser; Erhitzen des Wasser-Leinsamen-Mischung auf eine Temperatur im Bereich von 60 bis 100 °C, z. B. auf etwa 70 bis 95 °C; Auffangen der wasserlöslichen Phase und Trocknen der wasserlöslichen Phase.

3. Mayonnaiseartiges Produkt auf Leinsamenbasis nach einem der vorstehenden Ansprüche, wobei der pflanzliche Bestandteil durch ein Verfahren erhältlich ist, umfassend die Schritte des Zermahlens der Leinsamen, optional zusammen mit Blumenkohl, Flageolets und/oder Tomaten; Extrahieren der zermahlenen Zusammensetzung mit Wasser bei etwa 80-95 °C etwa 5 bis 50 Minuten lang; Auffangen der löslichen Phase und Trocknen der löslichen Phase.

4. Mayonnaiseartiges Produkt auf Leinsamenbasis nach Anspruch 1, umfassend Öl, Essig, Leinsamenmehl und Flageoletmehl.

5. Mayonnaiseartiges Produkt auf Leinsamenbasis nach einem der vorstehenden Ansprüche, ferner umfassend Salz und/oder Gewürze.

6. Mayonnaiseartiges Produkt auf Leinsamenbasis nach einem der vorstehenden Ansprüche, ferner umfassend Wasser.

7. Mayonnaiseartiges Produkt auf Leinsamenbasis nach einem der vorstehenden Ansprüche, umfassend zu etwa 50-70 Gew.-% Öl.

8. Mayonnaiseartiges Produkt auf Leinsamenbasis nach einem der vorstehenden Ansprüche, umfassend zu etwa 30-50 Gew.-% Öl.

9. Mayonnaiseartiges Produkt auf Leinsamenbasis nach einem der vorstehenden Ansprüche, umfassend zu etwa 10-30 Gew.-% Öl.

10. Mayonnaiseartiges Produkt auf Leinsamenbasis nach einem der vorstehenden Ansprüche, umfassend zu etwa 5-12 Gew.-% den pflanzlichen Bestandteil, zu etwa 3-7 Gew.-% Essig, zu etwa 1-2 Gew.-% Salz und/oder zu etwa 0,1-1 Gew.-% Gewürze.

11. Mayonnaiseartiges Produkt auf Leinsamenbasis nach einem der vorstehenden Ansprüche, das durch ein Verfahren erhältlich ist, umfassend die Schritte eines Mischens des pflanzlichen Bestandteils mit Wasser, eines Hinzufügens von Öl, Essig, Salz und Gewürzen und des Mischens der Mischung bis die gewünschte Festigkeit erreicht ist.

## Revendications

1. Produit de type mayonnaise à base de graine de lin comprenant de l'huile, du vinaigre, et un ingrédient végétal comprenant un extrait de graine de lin à base d'eau chaude séché ou de la farine de graine de lin, et dans lequel l'ingrédient végétal comprend en outre un extrait de flageolet à base d'eau chaude séché ou de la farine de flageolet.

2. Produit de type mayonnaise à base de graine de lin selon la revendication 1, dans lequel l'extrait de graine de lin à base d'eau chaude séché peut être obtenu par un procédé comprenant les étapes de broyage de graines de lin dans de l'eau ; de chauffage du mélange eau-graine de lin à une température dans la plage de 60 à 100 °C, par exemple à environ 70 à 95 °C ; de collecte de la phase soluble dans l'eau, et de séchage de la phase soluble dans l'eau.

3. Produit de type mayonnaise à base de graine de lin selon l'une des revendications précédentes, dans lequel l'ingrédient végétal peut être obtenu par un procédé comprenant les étapes de broyage de la graine de lin, facultativement conjointement avec du chou-fleur, des flageolets et/ou des tomates ; d'extraction de la composition broyée avec de l'eau à environ 80 à 95 °C pendant environ 5 à 50 minutes ; de collecte de la phase soluble et de séchage de la phase soluble.

4. Produit de type mayonnaise à base de graine de lin selon la revendication 1, comprenant de l'huile, du vinaigre, de la farine de graine de lin et de la farine de flageolet.

5. Produit de type mayonnaise à base de graine de lin selon l'une des revendications précédentes, comprenant en outre du sel et/ou des épices.

6. Produit de type mayonnaise à base de graine de lin selon l'une des revendications précédentes, comprenant en outre de l'eau.

7. Produit de type mayonnaise à base de graine de lin selon l'une des revendications précédentes, comprenant environ 50 à 70 % en poids d'huile.

8. Produit de type mayonnaise à base de graine de lin selon l'une des revendications précédentes, comprenant environ 30 à 50 % en poids d'huile.

9. Produit de type mayonnaise à base de graine de lin selon l'une des revendications précédentes, comprenant environ 10 à 30 % en poids d'huile.

10. Produit de type mayonnaise à base de graine de lin selon l'une des revendications précédentes, comprenant environ 5 à 12 % en poids de l'ingrédient végétal, environ 3 à 7 % en poids de vinaigre, environ 1 à 2 % en poids de sel, et/ou environ 0,1 à 1 % en poids d'épices.

11. Produit de type mayonnaise à base de graine de lin selon l'une des revendications précédentes, pouvant être obtenu par un procédé comprenant les étapes de mélange de l'ingrédient végétal avec de l'eau, d'ajout d'huile, de sel, de vinaigre et d'épices et de mélange du mélange jusqu'à ce que la fermeté souhaitée soit obtenue.
